# EUROPEAN PATENT SPECIFICATION

(11) **EP 2 694 811 B1**
(45) Date of publication and mention of the grant of the patent: **24.08.2016**
(21) Application number: 12788510.1
(22) Date of filing: 16.11.2012
(51) Int. Cl.: F03D 13/00

(54) **BEDPLATE OF A WIND TURBINE**
GRUNDPLATTE EINER WINDKRAFTANLAGE
PLAQUE DE SUPPORT D'ÉOLIENNE

(30) Priority: 06.12.2011 EP 11192186
(43) Date of publication of application: 12.02.2014
(73) Proprietor: Siemens Aktiengesellschaft, 80333 München (DE)
(72) Inventor: LIND, Soeren Oemann, DK-4700 Næstved (DK); LIBERGREN, Peter, DK-8464 Galten (DK)
(86) International application number: PCT/EP2012/072882
(87) International publication number: WO 2013/083387

(56) References cited:
- EP-A2- 1 944 508
- WO-A1-2013/108079
- DE-A1-102008 063 783
- US-A- 5 484 120
- US-A1- 2009 232 659

## Description

### Field of the invention and background art

The invention relates to a bedplate of a wind turbine.

In normal operation the wind will generate loads on the rotor of the wind turbine. A mayor part of these loads will be transferred through various drive train components and through the bedplate to the wind turbine tower. The bedplate may here be regarded as being a transition piece connecting the main bearing(s) towards the rotor at one side, and the yaw bearing towards the tower on the other side. However, the said bedplate may take different basic shapes dependent on which wind turbine technology used.

The document US 5,484,120 A discloses a support strut for a ram air driven turbine which provides an axially power system for an aircraft. The document US 2009/0232659 A1 discloses a structure of a wind turbine which includes a structure housing comprising a concrete material. The document DE 10 2008 063 783 A1 discloses a generator for a wind turbine.
WO 2013/108079 A1 discloses a wind turbine mainframe made of casted concrete. EP 1 944 508 A2 discloses a wind turbine including a tube bedplate, which can comprise composite material.

EP 2136074 A illustrates one type of bedplate for the conventional wind turbine construction with a drive train comprising a main shaft and a gearbox.

US 7431567 B illustrates one type of bedplate for a direct drive wind turbine construction without a main shaft and gear box.

It is known to manufacture the bedplate in solid metal, usually in welded steel or cast iron. These types of constructions of prior art can be made in large numbers, but have the disadvantage that they offer only moderate structural properties compared to the weight.

### Description of the invention

The objective of the invention is to offer a bedplate which is more stable and lighter than known bedplates and to provide a wind turbine with the same advantages.

This objective is solved by the features of the independent claims. The depending claims define further developments of the invention.

The inventive bedplate of a wind turbine comprises fibre-reinforced composite material. The wind turbine comprises a tower. The composite material comprises a resin matrix reinforced by fibers as well as by steel or plastic bars.

The invention is advantageous in that constructing a bedplate using these new materials, makes it possible to manufacture a bedplate which is as strong as known from prior art, but is lighter i.e. strength pr. "weight unit" is higher than conventional.

The invention is furthermore advantageous in that as the conventional bedplate constitute a large part of the total weight of a wind turbine nacelle construction, transportation, crane operation and tower costs can all be reduced due to the lower weight of the invented bedplate and thereby the nacelle.

The invention is even further advantageous in that the invented composite bedplate can be casted in a mould using well known and tested casting methods. In other words, the components comprise fibre-reinforced composite material or are made of or consist of fibre-reinforced composite material. Generally speaking the said composite materials are made of two or more constituent materials such as a reinforcement fibre and a resin matrix.

The fibres can be configured in 3 ways i.e. continuous, discontinuous or discontinuous, random-oriented fibre-reinforced composite. By the term continuous aligned fibre is meant that the individual fibres are ar ranged in such a manner that they lay relative close and that adjacent fibres to a large extent overlap in lengthwise direction in the composite. In contrast hereto discontinuous aligned fibres are arranged so that they do now in a large extend do overlap.

The fibers of at least part of or a part of the reinforced material of the inventive bedplate may be configured as continuous fibre reinforced material. Moreover, the fibers of at least part of or a part of the reinforced material may be configured as discontinuous aligned fibre reinforced material. Furthermore, the fibers of at least part of or a part of the reinforced material can be configured as discontinuous random oriented fibre reinforced material.

Preferably, the reinforcement fibers are embedded in the composite material. Moreover, the reinforcement comprises reinforcement bars made of steel or plastics.

The material of the fibers can be at least one of steel, carbon, glass, Kevlar, basalt or any combination thereof. The composite material comprises a resin matrix. The composite material can comprise a matrix and the material of the matrix comprises or is at least one of concrete, epoxy, polyester, vinylester, iron, steel or any combination thereof. The concrete may be pre-stressed concrete.

Moreover, the bed plate can at least partly be provided with a coating at the outside of the bedplate. Such a coating improves the resistance of the bedplate against environmental influences.

The bed plate can be a transition piece for connecting a main bearing towards a rotor at one side, and/or a yaw bearing towards a tower on the other side. For example, the bed plate is a transition piece connecting a main bearing towards a rotor at one side, and/or a yaw bearing towards a tower on the other side.

The angle between a first area of the bedplate connecting the main bearing(s) towards the rotor and a second area of the transition piece connecting the yaw bearing towards the tower may be in an angle in a range between 70 to 90 deg., for example such as in the range of 75 to 85 deg. preferable 82 deg..

Advantageously, the bed plate is hollow so as to allow the passage of a human being.

The composite material can comprise fibre rovings. For example, the fibers of the reinforced composite can be at least partly laid out as fiber rovings.

The composite material can comprise a layered or laminated structure. For various embodiments of the invention, the said continuous reinforced materials may constitute a layered or laminated structure.

The inventive wind turbine comprises a bed plate as previously described. The inventive wind turbine has the same advantages as the described bedplate. The wind turbine may comprise a main bearing, a rotor, a yaw bearing and a tower. The bed plate may be a transition piece connecting the main bearing towards the rotor at one side, and/or the yaw bearing towards the tower on the other side.

### Description of embodiments

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other.

Corresponding elements of different figures are designated with the same reference numeral and are not repeatedly described.
- Figure 1: schematically shows a wind turbine.
- Figure 2: schematically shows fibre-reinforced composite material being configured in 3 ways.
- Figure 3: schematically shows a bedplate for a direct drive wind turbine construction and part of the wind turbine.
- Figure 4: schematically shows a bedplate for a direct drive wind turbine construction and part of the wind turbine, as shown in Figure 3.
- Figure 5: schematically shows a bedplate for a geared wind turbine construction and part of the wind turbine.

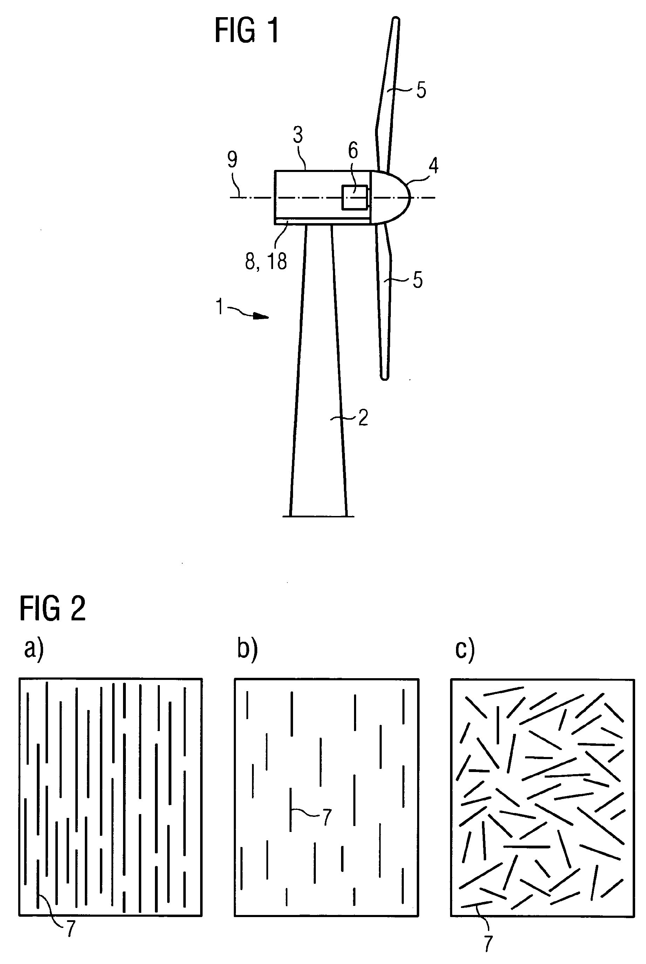

Figure 1 schematically shows a wind turbine 1. The wind turbine 1 comprises a tower 2, a nacelle 3 and a hub 4. The nacelle 3 is located on top of the tower 2. The hub 4 comprises a number of wind turbine blades 5. The hub 4 is mounted to the nacelle 3. Moreover, the hub 4 is pivot-mounted such that it is able to rotate about a rotation axis 9. A generator 6 is located inside the nacelle 3. The wind turbine 1 is a direct drive wind turbine or a geared wind turbine. The bedplate is indicated by reference numerals 8 and 18.

The present invention relates in general to take advantage of new materials, by using reinforced composite materials to the construction of the bedplate 8, 18.

Figure 2 schematically shows fibre-reinforced composite material being configured in 3 ways i.e.: continuous, aligned fibre-reinforced composite as shown in figure 2(a), discontinuous, aligned fibre-reinforced composite as shown in figure 2(b) or discontinuous, random-oriented fibre-reinforced composite as shown in figure 2(c). The fibres are designated by reference numeral 7.

As previously mentioned, by the term continuous aligned fibre is meant that the individual fibers 7 are arranged in such a manner that they lay relative close and that adjacent fibres 7 to a large extent overlap in lengthwise direction in the composite. In Figure 2(a) the individual fibres are oriented parallel or nearly parallel to each other.

In contrast hereto discontinuous aligned fibres are arranged so that they do now in a large extend do overlap. This is schematically shown in Figure 2(b), wherein the individual fibres 7 are oriented parallel or nearly parallel to each other.

Figure 2(c) schematically shows random-oriented fibre-reinforced composite, wherein the individual fibres 7 are randomly oriented to each other. The individual fibres 7 include random angles with each other. Some of the individual fibres 7 do overlap.

Generally speaking the said composite materials are made of two or more constituent materials such as a reinforcement fibre and a resin matrix.

The fibres suitable for the present invention may e.g. be of the types steel, carbon, glass, kevlar or basalt. Other types of fibres suitable for making composite materials are however also included.

The resin matrix suitable for the present invention may e.g. be of the types concrete, epoxy, polyester, vinylester, iron, steel etc.

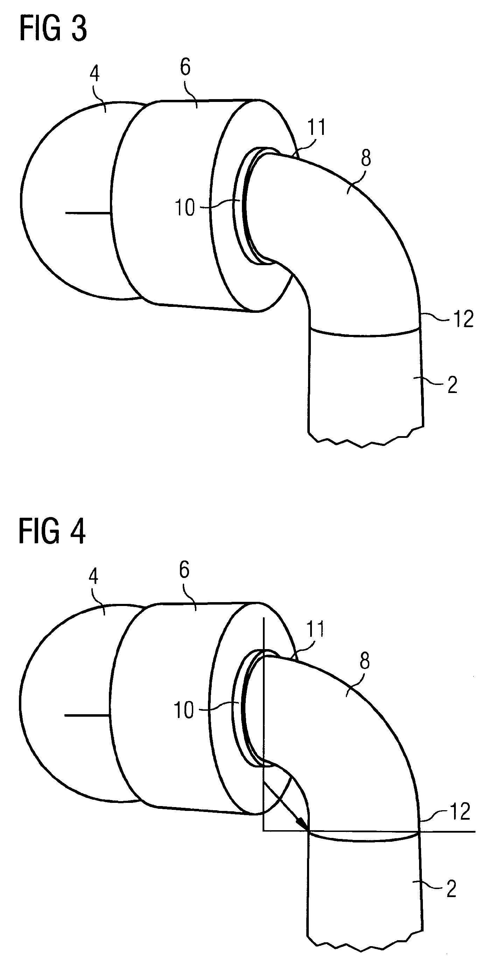

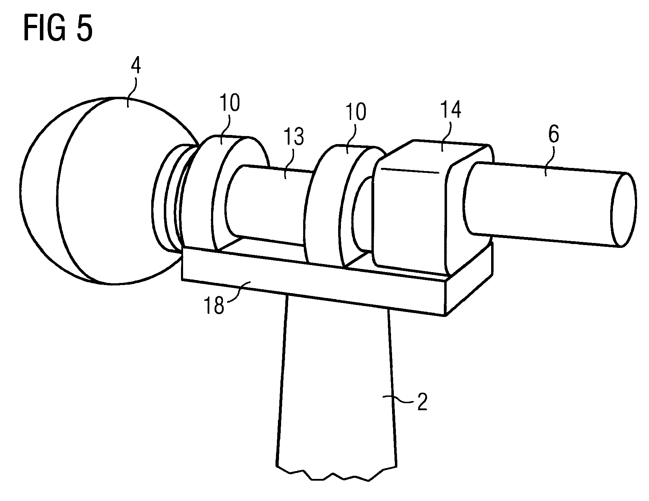

Two types of bedplate are schematically illustrated in figures 3, 4 and 5. Figures 3 and 4 schematically show a bedplate for a direct drive wind turbine construction and part of the wind turbine. Figure 5 schematically shows a bedplate for a geared wind turbine construction and part of the wind turbine.

In a first embodiment of the invention the fibers of at least a part of the reinforced material is configured as continuous fibre reinforced material. This is advantageous in that the fibers can be directed or extended in the directions where tension forces occur in the casted bedplate structure. In turn this ensures that material can be saved as material in areas where there are low tension forces can be reduced.

In a second embodiment of the invention the fibers of at least a part of the reinforced material is configured as discontinuous aligned fibre reinforced material

In a third embodiment of the invention the fibers of at least a part of the reinforced material is configured as discontinuous random oriented fibre reinforced material. This is advantageous in that the composite material has enhanced strengthening properties in substantially all directions, and thereby no special attention has to be put on how and where to orient the fibers.

In one embodiment of the invention the reinforcement fibers are embedded in the composite material. This is advantageous in that it makes a very strong composite material.

According to the invention the reinforcement comprises reinforcement bars such as made of steel, plastics, carbon, glass-fibre etc. Hereby it is possible to reinforce the casted structure in load carrying directions. Even further such bars are easy to handle and does not require special attention on avoiding wrinkles etc. due to un-even lay up of fibers.

In one embodiment of the invention the material of the fibers is at least one of steel, carbon, glass, Kevlar, basalt or any combination thereof. This is advantageous in that each of these products has suitable characteristic properties for being integrated into the composite material of a wind turbine bed plate.

In one embodiment of the invention the composite material comprises a resin matrix.

In one embodiment of the invention the material of the matrix are at least one of concrete, epoxy, polyester, vinylester, iron, steel or any combination thereof. This is advantageous in that in combination with the fibers a very strong bedplate composite construction can be made.

In one embodiment of the invention the concrete is pre-stressed concrete. This is advantageous in that it is a special casted structure with enhanced mechanical properties.

In one embodiment of the invention the bed plate further is at least partly provided with a coating at the outside of the bed plate. This is advantageous in that the bed plate thereby can be protected against environmental influences, such as water, salt-water, grease from bearings, oil, humid air etc.

In the example shown in Figures 3 and 4, the hub 4 is directly connected to the generator 6. The bedplate 8 is a transition piece connecting the main bearing(s) 10 towards the rotor at one side, and the yaw bearing towards the tower 2 on the other side. Hereby it is ensured that the components of the wind turbine 1 is carried properly and is kept in position sufficiently.

The bed plate 8, which has not the shape of a plate, comprises a first portion or area 11 and a second portion or area 12. In one embodiment of the invention the angle between the first area 11 of the bedplate 8 connecting the main bearing(s) 10 towards the rotor and the second area 12 of the transition piece connecting the yaw bearing towards the tower 2 is in an angle in a range between 70 to 90 deg., such as in the range of 75 to 85 deg. preferable 82 deg. This is sought schematically illustrated on the figure 4, where the vertical line indicates the end surface of said first area 11, the horizontal line indicates the end surface of the second area 12 and the arrow-line 15 indicates the angle between the said areas 11 and 12.

In the example shown in Figure 5 the bedplate 18 has the shape of a plate. It is connected to the tower 2. The generator 6, a gearbox 14, a main shaft 13 and main bearings 10 are placed onto the bedplate 18. The hub 4 is connected to the main shaft 13 by means of a first main bearing 10. The main shaft 13 is connected to the gearbox 14 by means of a second main bearing 10. The generator 6 is connected to the gearbox 14. In Figure 5 the generator 6 protrudes the bedplate 18.

In one embodiment of the invention, the bedplate 8, 18 is hollow so as to allow the passage of a human being. Thereby it is ensured e.g. service technicians can pass through the invented bedplate 8, 18 so as to allow passage e.g. from the inner of the bedplate 8, 18 to the outer of the bedplate 8, 18, from one side of the bedplate 8, 18 to the other side of the bedplate etc.

The invention also relates to a wind turbine comprising the invented bedplate.

In one embodiment of the invention the fibers of the reinforced composite are at least partly laid out as fiber rovings.

For various embodiments of the invention, the said continuous reinforced materials may constitute a layered or laminated structure.

## Claims

1. A bedplate (8, 18) of a wind turbine (1) comprising a tower (2), said bedplate (8, 18) comprising a composite material,
**characterised in that** said material comprises a resin matrix reinforced by fibres as well as steel or plastic bars.

2. A bedplate (8, 18) according to claim 1,
wherein the fibers of at least a part of the reinforced material are configured as continuous fibre reinforced material or the fibers of at least a part of the reinforced material is configured as discontinuous aligned fibre reinforced material or the fibers of at least a part of the reinforced material is configured as discontinuous random oriented fibre reinforced material.

3. A bedplate (8, 18) according to any of the preceding
claims, wherein the reinforcement fibers are embedded in the composite material.

4. A bedplate (8, 18) according to any of the preceding
claims, wherein the material of the fibers are at least one of steel, carbon, glass, Kevlar, basalt or any combination thereof.

5. A bedplate (8, 18) according to any of the preceding
claims, wherein the composite material comprises a matrix and the material of the matrix comprises at least one of epoxy, polyester, vinylester or any combination thereof.

6. A bedplate (8, 18) according to any of the preceding
claims, wherein the bedplate (8, 18) is at least partly provided with a coating at the outside of the bedplate (8, 18).

7. A bedplate (8, 18) according to any of the preceding
claims, wherein the bedplate (8, 18) is a transition piece for connecting a main bearing (10) towards a rotor at one side, and/or a yaw bearing towards a tower (2) on the other side.

8. A bedplate (8, 18) according to claim 7,
wherein the angle between a first area (11) of the bedplate (8, 18) connecting the main bearing(s) (10) towards the rotor and a second area (12) of the transition piece connecting the yaw bearing towards the tower (2) is in an angle in a range between 70 to 90 deg..

9. A bedplate (8, 18) according to any of the preceding
claims, wherein the bedplate (8, 18) is hollow so as to allow the passage of a human being.

10. A bedplate (8, 18) according to any of the preceding claims, wherein the fibre-reinforced composite material comprises fibre rovings and/or a layered or laminated structure.

11. A wind turbine (1) comprising a tower (2) and a bedplate (8, 18) according to any of the preceding claims 1 to 10.

12. The wind turbine (1), as claimed in claim 11,
wherein the wind turbine (1) comprises a main bearing (10), a rotor, a yaw bearing and a tower (2), and wherein the bedplate (8, 18) is a transition piece connecting the main bearing (10) towards the rotor at one side, and/or the yaw bearing towards the tower (2) on the other side.

## Patentansprüche

1. Grundplatte (8, 18) einer Windenergieanlage (1), die einen Turm (2) umfasst, wobei die Grundplatte (8, 18) ein Verbundmaterial umfasst,
**dadurch gekennzeichnet, dass** es sich bei dem Material um eine Harzmatrix handelt, die mit Fasern sowie mit Stahl- oder Kunststoffstäben verstärkt ist.

2. Grundplatte (8, 18) nach Anspruch 1,
bei der die Fasern von zumindest einem Teil des verstärkten Materials als endlosfaserverstärktes Material oder als mit ausgerichteten diskontinuierlichen Fasern verstärktes Material oder als mit wirr ausgerichteten diskontinuierlichen Fasern verstärktes Material konfiguriert sind.

3. Grundplatte (8, 18) nach einem der vorhergehenden Ansprüche, bei der die Verstärkungsfasern in das Verbundmaterial eingebettet sind.

4. Grundplatte (8, 18) nach einem der vorhergehenden Ansprüche, bei der das Material der Fasern zumindest aus Stahl, Kohlenstoff, Glas, Kevlar, Basalt oder einer beliebigen Kombination daraus bestehen kann.

5. Grundplatte (8, 18) nach einem der vorhergehenden Ansprüche, bei der das Verbundmaterial eine Matrix und das Material der Matrix zumindest Epoxidharz, Polyester, Vinylester oder eine beliebige Kombination davon umfasst.

6. Grundplatte (8, 18) nach einem der vorhergehenden Ansprüche, wobei die Grundplatte (8, 18) auf ihrer Außenseite zumindest teilweise mit einer Beschichtung versehen ist.

7. Grundplatte (8, 18) nach einem der vorhergehenden Ansprüche, wobei es sich bei der Grundplatte (8, 18) um ein Zwischenstück zum Verbinden eines Hauptlagers (10) mit einem Rotor auf einer Seite und/oder eines Azimutlagers mit einem Turm (2) auf der anderen Seite handelt.

8. Grundplatte (8, 18) nach Anspruch 7,
bei der der Winkel zwischen einer ersten Region (11) der Grundplatte (8, 18), die das/die Hauptlager (10) mit dem Rotor verbindet, und einer zweiten Region (12) des Zwischenstücks, die das Azimutlager mit dem Turm (2) verbindet, bei einem Winkel in einem Bereich zwischen 70 und 90 Grad liegt.

9. Grundplatte (8, 18) nach einem der vorhergehenden Ansprüche, wobei die Grundplatte (8, 18) hohl ist, damit ein Mensch durch sie hindurchgehen kann.

10. Grundplatte (8, 18) nach einem der vorhergehenden Ansprüche, bei der das faserverstärkte Verbundmaterial Faser-Rovings und/oder eine geschichtete oder laminierte Konstruktion umfasst.

11. Windenergieanlage (1) mit einem Turm (2) und einer Grundplatte (8, 18) nach einem der vorhergehenden Ansprüche 1 bis 10.

12. Windenergieanlage (1) nach Anspruch 11,
wobei die Windenergieanlage (1) ein Hauptlager (10), einen Rotor, ein Azimutlager und einen Turm (2) umfasst und es sich bei der Grundplatte (8, 18) um ein Zwischenstück handelt, das auf der einen Seite das Hauptlager (10) mit dem Rotor und/oder auf der anderen Seite das Azimutlager mit dem Turm (2) verbindet.

## Revendications

1. Bâti (8, 18) de nacelle d'une éolienne (1) comprenant une tour (2), ledit bâti (8, 18) de nacelle comprenant un matériau composite,
**caractérisé en ce que** ledit matériau comprend une matrice de résine renforcée par des fibres ainsi que des barres d'acier ou de plastique.

2. Bâti (8, 18) de nacelle selon la revendication 1,
dans lequel les fibres d'au moins une partie du matériau renforcé sont configurées comme un matériau renforcé à fibres continues, ou bien les fibres d'au moins une partie du matériau renforcé sont configurées comme un matériau renforcé à fibres discontinues alignées, ou bien les fibres d'au moins une partie du matériau renforcé sont configurées comme un matériau renforcé à fibres discontinues orientées aléatoirement.

3. Bâti (8, 18) de nacelle selon l'une quelconque des revendications précédentes, dans lequel les fibres de renfort sont noyées dans le matériau composite.

4. Bâti (8, 18) de nacelle selon l'une quelconque des revendications précédentes, dans lequel le matériau des fibres est au moins un parmi l'acier, le carbone, le verre, le kevlar, le basalte ou une quelconque combinaison de ceux-ci.

5. Bâti (8, 18) de nacelle selon l'une quelconque des revendications précédentes, dans lequel le matériau composite comprend une matrice et le matériau de la matrice comprend au moins un parmi un époxy, un polyester, un ester vinylique ou une quelconque combinaison de ceux-ci.

6. Bâti (8, 18) de nacelle selon l'une quelconque des revendications précédentes, dans lequel le bâti (8, 18) de nacelle est au moins partiellement prévu avec un revêtement sur l'extérieur du bâti (8, 18) de nacelle.

7. Bâti (8, 18) de nacelle selon l'une quelconque des revendications précédentes, dans lequel le bâti (8, 18) de nacelle est une pièce de transition pour connecter un palier principal (10) vers un rotor sur un côté, et/ou une couronne d'orientation vers une tour (2) sur l'autre côté.

8. Bâti (8, 18) de nacelle selon la revendication 7,
dans lequel l'angle entre une première surface (11) du bâti (8, 18) de nacelle connectant le/les palier(s) principal/principaux (10) vers le rotor et une deuxième zone (12) de la pièce de transition connectant la couronne d'orientation vers la tour (2) est dans un angle dans une plage entre 70 à 90 degrés.

9. Bâti (8, 18) de nacelle selon l'une quelconque des revendications précédentes, dans lequel le bâti (8, 18) de nacelle est creux de façon à permettre le passage d'un être humain.

10. Bâti (8, 18) de nacelle selon l'une quelconque des revendications précédentes, dans lequel le matériau composite renforcé de fibres comprend des stratifils de fibre et/ou une structure en couches ou stratifiée.

11. Éolienne (1) comprenant une tour (2) et un bâti (8, 18) de nacelle selon l'une quelconque des revendications précédentes 1 à 10.

12. Éolienne (1) selon la revendication 11,
dans laquelle l'éolienne (1) comprend un palier principal (10), un rotor, une couronne d'orientation et une tour (2), et dans laquelle le bâti (8, 18) de nacelle est une pièce de transition connectant le palier principal (10) vers le rotor sur un côté, et/ou la couronne d'orientation vers la tour (2) sur l'autre côté.
